# EUROPEAN PATENT APPLICATION

(11) **EP 4 838 996 A1**
(43) Date of publication of application: **11.11.2026**
(21) Application number: 25738336.4
(22) Date of filing: 03.01.2025
(51) Int. Cl.: H04W 74/0816

(54) **DATA SENDING METHOD, PRIMARY NETWORK DEVICE, SECONDARY NETWORK DEVICE, AND MEDIUM**

(30) Priority: 12.01.2024 CN 202410051471
(71) Applicant: Sanechips Technology Co., Ltd., Shenzhen, Guangdong 518055 (CN)
(72) Inventor: CHENG, Jianfei, Shenzhen, Guangdong 518055 (CN); SUN, Bo, Shenzhen, Guangdong 518055 (CN); LIU, Zhe, Shenzhen, Guangdong 518055 (CN); CHEN, Yu, Shenzhen, Guangdong 518055 (CN); FENG, Aijuan, Shenzhen, Guangdong 518055 (CN)
(74) Representative: Canzler & Bergmeier Patentanwälte Partnerschaft mbB
(86) International application number: PCT/CN2025/070532
(87) International publication number: WO 2025/148805

(57) **Abstract**

Provided in the present application is a data sending method, which is executed by a primary network device. The method comprises: completing a first backoff procedure in a target channel; determining a waiting time; and after the waiting time, performing coordinated data transmission with a secondary network device in the target channel. Further provided in the present application are a data sending method for a secondary network device, a primary network device, a secondary network device, and a computer-readable medium.

## Description

### RELATED APPLICATIONS

The present disclosure claims the priority to Chinese Patent Application No. 202410051471.9 filed on January 12, 2024, the contents of which are incorporated herein by reference in their entirety.

### TECHNICAL FIELD

The present disclosure relates to the field of channel contention technology, and in particular, to a data sending method, a primary network device, a secondary network device, and a computer readable medium.

### BACKGROUND

Network devices such as an Access Point (AP) can compete for a right to use a channel based on Carrier Sense Multiple Access with Collision Avoid (CSMA/CA).

However, in some cases, a network device with a coordinated data transmission capability can gain more opportunities of using a channel, which destroys fairness of channel access, causes a reduction of transmission rate, an increase of delay, and a reduction of service quality of other network devices, affects user experience, and reduces throughput and capacity of a whole network.

### SUMMARY

The present disclosure provides a data sending method, a primary network device, a secondary network device, and a computer readable medium.

In a first aspect, an embodiment of the present disclosure provides a data sending method performed by a primary network device, including: completing a first backoff procedure on a target channel; determining a waiting time; and performing coordinated data transmission with a secondary network device on the target channel after the waiting time passes.

In a second aspect, an embodiment of the present disclosure provides a data sending method performed by a secondary network device, including: receiving, during a second backoff procedure, synchronization information sent by a primary network device, the synchronization information being configured to indicate a coordinated data transmission process on a target channel; in response to the second backoff procedure not being completed after a waiting time passes, performing coordinated data transmission with the primary network device on the target channel; and in response to the second backoff procedure being completed after the waiting time passes, sending data.

In a third aspect, an embodiment of the present disclosure provides a primary network device, including a communication unit, a storage device, and a processor; and the communication unit is configured to transmit data on a channel, the storage device stores a computer program executable by the processor, and when executed by the processor, the computer program implements the data sending method according to any of the embodiments of the present disclosure.

In a fourth aspect, an embodiment of the present disclosure provides a secondary network device, including a communication unit, a storage device, and a processor; and the communication unit is configured to transmit data on a channel, the storage device stores a computer program executable by the processor, and when executed by the processor, the computer program implements the data sending method according to any of the embodiments of the present disclosure.

In a fifth aspect, an embodiment of the present disclosure provides a computer readable medium having stored therein a computer program which, when executed by a processor, implements the data sending method according to any of the embodiments of the present disclosure.

### BRIEF DESCRIPTION OF DRAWINGS

In the drawings for the embodiments of the present disclosure:
FIG. 1 is a schematic structural diagram of a wireless network according to an embodiment of the present disclosure;
FIG. 2 is a flowchart illustrating a data sending method for a primary network device according to an embodiment of the present disclosure;
FIG. 3 is a flowchart illustrating a data sending method for a primary network device according to another embodiment of the present disclosure;
FIG. 4 is a flowchart illustrating a data sending method for a secondary network device according to an embodiment of the present disclosure;
FIG. 5 is a flowchart illustrating a data sending method for a secondary network device according to another embodiment of the present disclosure;
FIG. 6 is a block diagram of a primary network device according to an embodiment of the present disclosure;
FIG. 7 is a block diagram of a secondary network device according to an embodiment of the present disclosure;
FIG. 8 is a block diagram of a computer readable medium according to an embodiment of the present disclosure;
FIG. 9 is a schematic diagram illustrating a backoff procedure of CSMA/CA in the related technology;
FIG. 10 is a schematic diagram illustrating a coordinated data transmission process in the related technology;
FIG. 11 is a flowchart illustrating another data sending method according to an embodiment of the present disclosure;
FIG. 12 is a flowchart illustrating another data sending method according to an embodiment of the present disclosure;
FIG. 13 is a flowchart illustrating another data sending method according to an embodiment of the present disclosure;
FIG. 14 is a flowchart illustrating another data sending method according to an embodiment of the present disclosure; and
FIG. 15 is a flowchart illustrating another data sending method according to an embodiment of the present disclosure.

### DETAIL DESCRIPTION OF EMBODIMENTS

In order to enable those of ordinary skill in the art to better understand the technical solutions of the present disclosure, data sending methods, a primary network device, a secondary network device, and a computer readable medium provided in the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described below. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclosure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe the specific embodiments, and are not intended to limit the present disclosure. The term "and/or" used herein includes any and all combinations of one or more associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The present disclosure is not limited to the embodiments illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

With the rapid development of computers and the Internet, the Wireless Local Area Network (WLAN) technology attracts more and more attention, and the WLAN technology allows terminal devices such as a smart phone, a personal computer, a notebook computer, a tablet computer, and a multimedia player to access wireless networks (such as a home network, a corporate network, and the Internet in a specific service areas) based on short-range wireless communication technology.

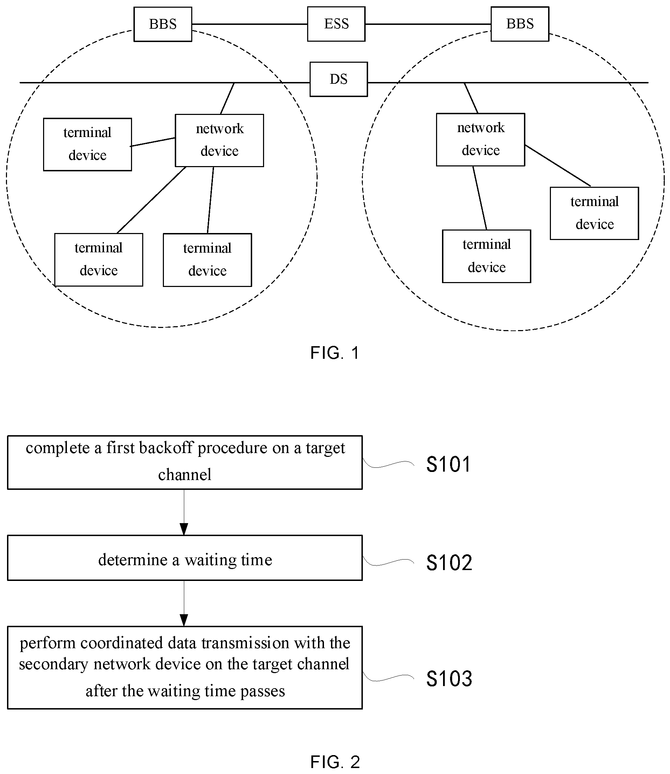

Referring to FIG. 1, a wireless network may include one or more Basic Service Sets (BSSs), each BSS represents a group of devices that are related to each other and can communicate with each other, a plurality of BBSs constitute an Extended Service Set (ESS), the different BSSs in the ESS may be distinguished by BSS identification information, and the BSS identification information may be a BSS ID carried in a Medium Access Control (MAC) frame header or a BSS Color carried in a Port Physical Layer (PHY) frame header.

Referring to FIG. 1, each BSS may include one or more network devices, and a network device is a device which can be connected through a Distribution System (DS) and allow other terminal devices to access. The network device may be in the form of an AP serving as a Personal Coordination Point (PCP), such as a router or a mobile terminal with hotspot enabled; or, the network device may be in other forms such as a base station (e.g., eNodeB). Each BSS may further include one or more terminal devices, and a terminal device is a device such as a Station (STA) which can be wirelessly connected to a nearby network device (e.g., an AP). Specifically, the terminal device may be a smart phone, a personal computer, a notebook computer, or a tablet computer.

Alternatively, the network device (e.g., an AP) and the terminal device (e.g., an STA) may form an Ad Hoc network (Ad-hoc Mode), that is, the network device and the terminal device form a self-organizing wireless network, and can directly perform point-to-point communication or many-to-many communication between the devices.

The network device (e.g., an AP) and the terminal device (e.g., an STA) need a channel (a wireless channel) for data transmission, and each channel has limited carrying capacity, so when a plurality of network devices desire to use a same channel (a shared channel), the network devices are desired to compete for a right to use the channel in a certain way.

For example, the 802.11 series standards of the Institute of Electrical and Electronics Engineers (IEEE) are related to the WLAN technology, and the IEEE 802.11MAC standard specifies that a Distributed Coordination Function (DCF) for channel contention can be implemented by CSMA/CA.

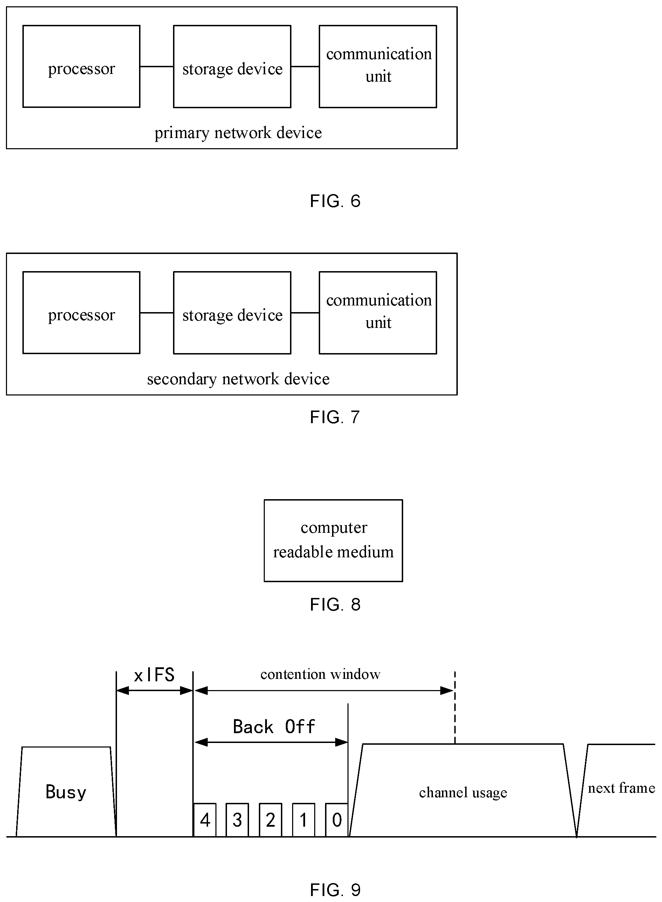

In some related technologies, referring to FIG. 9, based on CSMA/CA, when a network device (e.g., an AP) desires to transmit data on a channel (for example, transmitting to a terminal device), the network device is desired to compete for a right to use the channel through a Back Off (or, backoff) procedure, which includes the following operations.

At operation (1), the network device listens to the channel, and determines whether a channel state of the channel is idle or busy (Busy).

For example, the network device may perform Clear Channel Assessment (CCA), that is, the network device detects a strength of a signal present on the channel, determines that the channel is busy (or the channel is fully occupied) if the strength of the signal is greater than a predetermined strength threshold (a CCA threshold), and determines the channel is idle (or the channel is not fully occupied) if no signal is sensed or the strength of the signal is less than the CCA threshold.

At operation (2), when the channel state is always idle in an Inter Frame Space (IFS, which may also be referred to as xIFS), the network device randomly determines an initial backoff time (also referred to as a backoff value) in a Contention Window (CW).

The contention window is a time range of (0, CW), with CW denoting a predetermined upper limit time of the contention window. That is, the network device generates a random value in the range of (0, CW) by a backoff algorithm as the initial backoff time, i.e., a total time of the backoff procedure.

For example, CW may be represented by a certain number of time slots, so that the selected initial backoff time is also a certain number of time slots. For example, referring to FIG. 9, CW is 8 time slots, and the selected initial backoff time is 5 time slots.

At operation (3), the network device keeps listening to the channel, and when the channel state is idle for a certain time, the certain time is subtracted from the initial backoff time to acquire a remaining backoff time.

For example, the network device may detect the channel state in each time slot, and decrease the number of time slots of the remaining backoff time by 1 each time it is detected that the channel state is idle in one time slot. For example, it is detected that the channel state is idle in a total of three time slots, then the remaining backoff time is reduced from 5 time slots (i.e., the initial backoff time) to 2 time slots.

At operation (4), when the remaining backoff time is reduced to 0 (e.g., 0 time slot), the network device uses the channel to transmit data.

At operation (4-1), if the data transmission succeeds, the network device restarts the backoff procedure before transmitting next frame data.

At operation (4-2), if the data transmission fails (for example, due to a collision caused by other network devices simultaneously starting to transmit data on the channel), the network device restarts the backoff procedure, but the contention window changes to (0, 2*CW), that is, the upper time limit of the contention window is doubled.

Therefore, based on the backoff procedure of CSMA/CA, the time for each network device to start using the channel is randomly determined by the backoff algorithm, which guarantees fairness among different network devices, realizes fair channel resource sharing, and reduces probability of collision.

In some other related technologies, the network device may further perform coordinated data transmission.

The 802.11n standard introduces Enhanced Distributed Channel Access (EDCA) implemented through multi-access point coordinated transmission technology, in which a plurality of APs in a wireless network (e.g., a WLAN) may form a coordinated transmission set, and the plurality of APs in the coordinated transmission set may cooperate and operate in coordination, so as to provide better coverage, capacity and performance for solving the problems of heavy network load and serious network overlap.

The plurality of network devices in the coordinated transmission set may be classified as a primary network device and a secondary network device.

The primary network device is responsible for scheduling operation of the other network devices to avoid collision and improve transmission efficiency, and may be in the form of a primary AP (a sharing AP or a master AP); and the secondary network device operates under the scheduling of the primary network device, and may be in the form of a secondary AP (a shared AP or a slave AP).

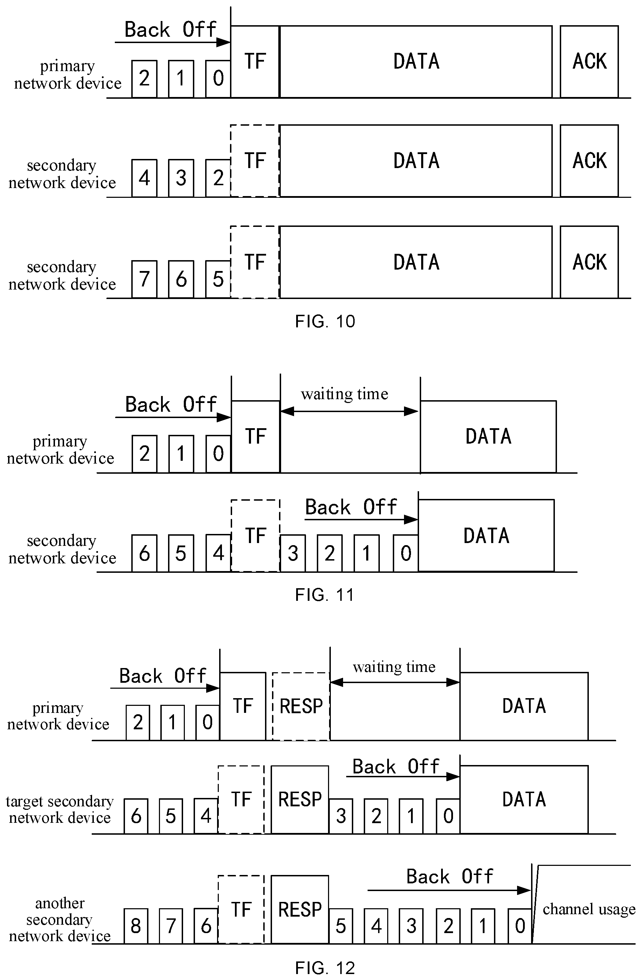

Referring to FIG. 10, after accessing a channel through the backoff procedure of CSMA/CA, the primary network device may send a Trigger Frame (TF) to other secondary network devices that are during the backoff procedures, and the TF carries instruction information for the secondary network devices to instruct the secondary network devices how to perform time slot allocation, power control, and transmission time adjustment, so as to ensure successful coordinated transmission.

In this way, when the primary network device sends data (DATA) on the channel, the primary network device and the secondary network devices may perform coordinated data transmission on the channel together by sharing frequency, space, and time, and perform acknowledgement (ACK) together. Specific coordinated transmission modes may include Coordinated Beamforming (C-BF), Coordinated Spatial Reuse (C-SR), Coordinated Orthogonal Frequency Division Multiple Access (C-OFDMA), Coordinated Time Division Multiple Access (C-TDMA), Joint Single-User Multiple-Input Multiple-Output (J-SUMIMO), and Joint Multi-User Multiple-Input Multiple-Output (J-MUMIMO).

Therefore, the secondary network device can not only acquire the right to use the channel through the backoff procedure thereof but also use the channel directly through coordinated data transmission after other primary network devices gain access to the channel.

Thus, compared with other traditional network devices, the network device with the coordinated data transmission capability acquires more opportunities of using the channel, which destroys fairness of channel access, causes a reduction of transmission rate, an increase of delay, and a reduction of service quality of other network devices, affects user experience, and reduces throughput and capacity of a whole network.

In a first aspect, an embodiment of the present disclosure provides a data sending method, which is performed by a primary network device.

The data sending method provided in the embodiment of the present disclosure is used for a primary network device (such as a sharing AP) and a secondary network device (such as a shared AP) to transmit data together in a wireless network (such as a WLAN), and is specifically performed by the primary network device.

Referring to FIG. 1, the wireless network to which the embodiment of the present disclosure is applicable may include a plurality of network devices (e.g., APs), the different network devices are connected to each other (e.g., via a DS), and each network device may be further connected to one or more terminal devices (e.g., STAs).

In one implementation of the embodiment of the present disclosure, roles of the primary network device and the secondary network device may be determined based on initialization negotiation of a coordinated transmission set or based on factors such as a network topology, processing capabilities of the network devices, locations of the network devices, and coverage of the network devices. In this implementation, the roles of the primary network device and the secondary network device are permanent or semi-permanent relative to a network lifecycle.

Alternatively, in another implementation of the embodiment of the present disclosure, the primary network device may be a network device which first completes a backoff procedure of CSMA/CA (that is, which first gains a channel usage right) each time, and accordingly, the other network devices in the coordinated transmission set serve as the secondary network devices. In this implementation, the roles of the primary network device and the secondary network device dynamically change. For example, a network device may serve as the primary network device in one data transmission process, and serve as the secondary network device in a next data transmission process.

Therefore, "the method provided in the embodiments of the present disclosure is performed by a primary network device" merely means that the network device when performing the method provided in the embodiment of the present disclosure acts as the primary network device, and does not indicate that the primary network device and the secondary network device are of two different types.

Referring to FIG. 2, the data sending method according to the embodiment of the present disclosure includes:
S101, completing a first backoff procedure on a target channel;
S102, determining a waiting time; and
S103, performing coordinated data transmission with the secondary network device on the target channel after the waiting time passes.

When a network device is to send data on a channel (i.e., the target channel, such as a wireless channel with a terminal device), the network device is desired to compete for a channel usage right through a backoff procedure (i.e., the first backoff procedure) of CSMA/CA; when the network device first completes the first backoff procedure, and acquires a right to use the target channel, the network device may be taken as the primary network device to perform the method provided in the embodiments of the present disclosure.

According to the embodiments of the present disclosure, after the primary network device completes the first backoff procedure, the primary network device determines the "waiting time" instead of transmitting data immediately. Specific forms of the waiting time are various, for example, the waiting time may be in the form of a certain number of time slots or may be in the form of a specific time period.

Referring to FIG. 11, the primary network device enters a "waiting state (Wait)" after completing the backoff procedure, and does not send data in the waiting state, and the waiting state lasts for the waiting time. Then, after the waiting state ends (that is, after the waiting time passes), the primary network device starts performing coordinated data transmission (DATA) on the target channel together with the secondary network device by channel sharing.

In the waiting state, the primary network device does not use the target channel to send data, and is also not allowed to set a Network Allocation Vector (NAV) or perform other behaviors to occupy the target channel, so as to allow other network devices or terminal devices to compete for the target channel.

In the embodiments of the present disclosure, after gaining the target channel, the primary network device is desired to start performing coordinated data transmission after the waiting time passes, so that a usage time of the target channel by the secondary network device through the coordinated data transmission is "delayed", which is equivalent to reducing opportunities of using the channel by the secondary network device. Thus, the fairness of channel access is improved, transmission rate, delay, and service quality of the other network devices that do not have the coordinated data transmission capability are improved, the user experience is improved, and the throughput and capacity of the whole network are increased.

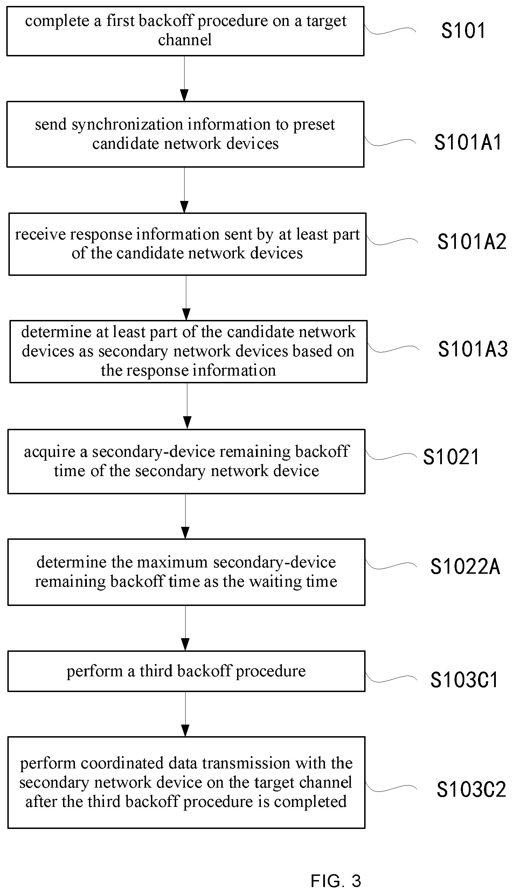

In some embodiments, referring to FIG. 3, between completing the first backoff procedure on the target channel (S101) and determining the waiting time (S102), the data sending method further includes:
S101A1, sending synchronization information to preset candidate network devices, with the synchronization information configured to indicate a coordinated data transmission process on the target channel;
S101A2, receiving response information sent by at least part of the candidate network devices; and
S101A3, determining at least part of the candidate network devices as secondary network devices based on the response information.

In order to complete the coordinated data transmission process, the primary network device and the secondary network device need to be "synchronized" in advance, and the synchronization includes determining which network devices are desired to be used as the secondary network devices (there is no need to take some network devices that do not desire to send data as the secondary network devices), and instructing the secondary network devices how to perform time slot allocation, power control, and transmission time adjustment.

Thus, referring to FIG. 12, after a certain network device completes the backoff procedure and determines that the network device itself can serve as the primary network device, the network device sends the synchronization information to the candidate network devices (such as other network devices in a same coordinated transmission set) that are possibly used as the secondary network devices, and determines which candidate network devices are used as the secondary network devices based on the response information returned by each candidate network device.

The synchronization information and the response information have various specific forms. For example, the synchronization information may be in the form of a TF or a synchronization frame, and the response information may be in the form of a response frame (RESP).

In a case where a plurality of candidate network devices are provided, in order to avoid collision of the response information, the synchronization information may further include a transmission parameter of the response information. For example, the synchronization message sent to each candidate network device may include a Resource Unit (RU) location for the candidate network device to reply with the response information (e.g., a response frame), and each candidate network device sends the response information at the indicated RU location using a Physical Layer Convergence Procedure (PLCP) Protocol Data Unit (PPDU) in Orthogonal Frequency Division Multiple Access (OFDMA) mode.

The synchronization information may exist alone, that is, referring to FIG. 11, after the primary network device sends the synchronization information, the secondary network device may not reply with the response information.

In some embodiments, referring to FIG. 3, determining the waiting time (S102) includes:
S1021, acquiring a secondary-device remaining backoff time of the secondary network device, with the secondary-device remaining backoff time being a remaining backoff time of a second backoff procedure which is being performed by the secondary network device; and
S1022, determining the waiting time based on the secondary-device remaining backoff time.

In one implementation of the embodiment of the present disclosure, before performing coordinated data transmission, each secondary network device performs a respective CSMA/CA backoff procedure (i.e., the second backoff procedure), and the backoff procedure of each secondary network device has a respective remaining backoff time (i.e., the secondary-device remaining backoff time); therefore, after the primary network device gains the channel, the primary network device may acquire the remaining backoff time of the secondary network device, and determine the waiting time based on the remaining backoff time, that is, based on the time for which the secondary network device is "originally" (in a case where no primary network device exists) desired to wait to use the channel, so as to guarantee the fairness of channel access more accurately.

It is also possible to take a preset time as the waiting time or generate the waiting time by a random algorithm.

In some embodiments, acquiring the secondary-device remaining backoff time of the secondary network device (S1021) includes:
S1021A, acquiring the secondary-device remaining backoff time of the secondary network device having a channel state of being idle.

In one implementation of the embodiment of the present disclosure, the primary network device may further acquire a channel state of the secondary network device, and acquire the remaining backoff time (i.e., the secondary-device remaining backoff time) of the secondary network device merely when the channel state of the secondary network device is idle.

In some embodiments, acquiring the secondary-device remaining backoff time of the secondary network device (S1021) includes at least one of:
S1021BA, acquiring the secondary-device remaining backoff time of the secondary network device by wired backhaul;
S1021BB, acquiring the secondary-device remaining backoff time of the secondary network device by CCA; or
S1021BC, sending backoff query information to the secondary network device, and determining the secondary-device remaining backoff time of the secondary network device based on backoff feedback information sent by the secondary network device.

In the embodiments of the present disclosure, specific ways for the primary network device to acquire the channel state and the remaining backoff time of the secondary network device are various.

For example, the primary network device may acquire the channel state of the secondary network device by wired backhaul.

For example, if an operating channel of the primary network device and an operating channel of the secondary network device include each other, the primary network device may indirectly acquire the channel state of the secondary network device by checking CCA of the operating channel of the secondary network device, whether the channel state is busy or idle may be indicated by local CCA and a NAV of the secondary network device, and the channel state may further include the remaining backoff time (i.e., the secondary-device remaining backoff time) of the secondary network device when the channel state is idle.

For example, the primary network device may send the backoff query information (for example, via an air interface), and the secondary network device adds the remaining backoff time thereof to the backoff feedback information based on the backoff query information, and sends the backoff feedback information to the primary network device (for example, via an air interface) for the primary network device to acquire the secondary-device remaining backoff time.

The backoff query information and the backoff feedback information may be dedicated information, or may also serve as other information. For example, the synchronization information (e.g., a TF) sent by the primary network device may further serve as the backoff query information, and the response information (e.g., RESP) sent by the secondary network device may serve as the backoff feedback information to carry the remaining backoff time.

In some embodiments, the secondary network device includes a plurality of ports, each of which has a port remaining backoff time; and acquiring the secondary-device remaining backoff time of the secondary network device (S1021) includes:
S1021C, acquiring a minimum port remaining backoff time of the secondary network device as the secondary-device remaining backoff time of the secondary network device.

In one implementation of the embodiment of the present disclosure, each secondary network device may be provided with a plurality of ports, and each port separately competes for a channel through a backoff procedure of CSMA/CA, so that each port is provided with a respective backoff counter, that is, each port has a respective remaining backoff time (i.e., the port remaining backoff time). Thus, the primary network device may use the minimum remaining backoff time of the ports of the secondary network device as the remaining backoff time of the entire secondary network device, and then perform coordinated data transmission with the port of the secondary network device which has the minimum remaining backoff time.

For example, based on EDCA, each secondary network device includes four Access Categories (ACs) as four ports, and each AC is provided with a respective backoff counter to record a port remaining backoff time, so that the primary network device may merely acquire a minimum value from the four backoff counters as the remaining backoff time of the secondary network device.

It is also feasible that the primary network device acquires the remaining backoff times of the plurality of ports of the secondary network device at the same time.

In some embodiments, referring to FIG. 3, determining the waiting time based on the secondary-device remaining backoff time (S1022) includes: S1022A, determining the maximum secondary-device remaining backoff time as the waiting time.

In one implementation of the embodiment of the present disclosure, "a maximum value" of the remaining backoff time of the secondary network device may be used as the waiting time.

For example, referring to FIG. 11, when the backoff procedure (i.e., the first backoff procedure) of the primary network device ends, the remaining backoff time of the secondary network device is four time slots; since merely one secondary network device is provided, and the maximum remaining backoff time of the secondary network device is four time slots, so that the waiting time may be determined to be four time slots.

Referring to FIG. 11, with the above manner, for the secondary network device having the maximum remaining backoff time, the time when the secondary network device starts performing coordinated data transmission is the time when the backoff procedure of the secondary network device ends, i.e., the time when the secondary network device is accessible to the channel through the normal backoff procedure. Thus, the secondary network device does not obtain additional opportunities on channel occupation, which can guarantee the fairness of channel access best.

The following technical solution is also feasible: if the waiting time is not the maximum secondary-device remaining backoff time, when the secondary network device starts performing coordinated data transmission, the backoff procedure of the secondary network device may not be completed or may have ended for a certain time.

In some embodiments, after the waiting time passes, performing coordinated data transmission with the secondary network device on the target channel (S1031) includes:
S103A, sending backoff adjustment information to the secondary network device, with the backoff adjustment information configured to instruct the secondary network device to set the remaining backoff time thereof to be equal to the waiting time.

In one implementation of the embodiment of the present disclosure, it is desired that the backoff procedure of the secondary network device participating in coordinated data transmission is completed at the end of the waiting time, rather than before or after the end of the waiting time, so as to reduce unnecessary channel usage.

In view of this, the primary network device may send the backoff adjustment information to the secondary network device to "inform" the secondary network device of the waiting time, so that the secondary network device may adjust the remaining backoff time of the backoff procedure (i.e., the second backoff procedure) of the secondary network device to the waiting time, thereby ending the second backoff procedure at the end of the waiting time.

It is also feasible that the secondary network device acquires the waiting time by itself by wired backhaul or by other means (for example, when the maximum secondary-device remaining backoff time is selected as the waiting time, the secondary network device may acquire all secondary-device remaining backoff times by wired backhaul, and set the remaining waiting time thereof to a maximum of the secondary-device remaining backoff times).

In some embodiments, acquiring the secondary-device remaining backoff time of the secondary network device (S1021) includes:
S1021D, acquiring secondary-device remaining backoff times of a plurality of secondary network devices.

Determining the waiting time based on the secondary-device remaining backoff time (S1022) includes:
S1022B, based on the secondary-device remaining backoff times, determining at least part of the secondary network devices as target secondary network devices, and determining the waiting time based on the secondary-device remaining backoff times of the target secondary network devices.

Performing coordinated data transmission with the secondary network device on the target channel (S103) includes:
S103B, performing coordinated data transmission with the target secondary network devices on the target channel.

In one implementation of the embodiment of the present disclosure, referring to FIG. 12, in a case where a plurality of secondary network devices are provided, the primary network device may select part or all of the secondary network devices as the "target secondary network devices" based on the remaining backoff times of the secondary network devices. Then, the waiting time is determined merely based on the remaining backoff times of the target secondary network devices, and coordinated data transmission is performed merely with the target secondary network devices. The other secondary network devices (in a case where not all the secondary network devices are selected as the target secondary network devices) that are not selected as the target network devices continue the conventional CSMA/CA backoff procedures and perform data transmission independently.

The above process of selecting the target secondary network devices may be performed in combination with other processes.

For example, after the primary network device sends the synchronization information to a plurality of candidate network devices and receives the response information, the primary network device may directly select part of the candidate network devices as the secondary network devices and also as the target network devices based on the secondary-device remaining backoff time in each response information, then determine the waiting time based on the remaining backoff times of the target secondary network devices, and perform coordinated data transmission.

In some embodiments, based on the secondary-device remaining backoff times, determining at least part of the secondary network devices as the target secondary network devices, and determining the waiting time based on the secondary-device remaining backoff times of the target secondary network devices (S1022B) includes:
S1022B11, determining a secondary network device having a minimum secondary-device remaining backoff time as a target secondary network device, and determining the secondary-device remaining backoff time of the target secondary network device as the waiting time.

In one implementation of the embodiment of the present disclosure, referring to FIG. 12, "one" secondary network device having the minimum remaining backoff time (e.g., four time slots) may be selected as the target secondary network device, and the remaining backoff time of the selected secondary network device is directly used as the waiting time.

Thus, on the basis of preventing the secondary network device from acquiring unfair channel access opportunities, the waiting time is shortened as much as possible, probability of collision caused by occupation of the target channel during the waiting time is reduced, and the primary network device and the secondary network device are prevented from being at a disadvantage in terms of channel access opportunities.

In some embodiments, referring to FIG. 3, after the waiting time passes, performing coordinated data transmission with the secondary network device on the target channel (S103) includes:
S103C1, performing a third backoff procedure, with an initial backoff time of the third backoff procedure being equal to the waiting time; and
S103C2, performing coordinated data transmission with the secondary network device on the target channel after the third backoff procedure is completed.

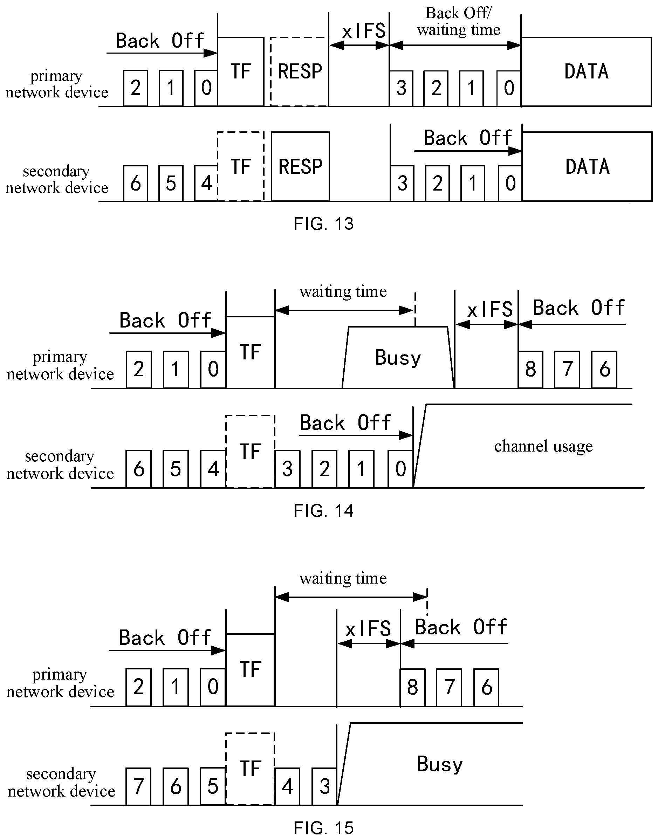

In one implementation of the embodiment of the present disclosure, referring to FIG. 13, after determining the waiting time (for example, determining the waiting time to be equal to the maximum secondary-device remaining backoff time), the primary network device may start a new backoff procedure (i.e., the third backoff procedure), and the initial backoff time of the third backoff procedure is equal to the waiting time, so that coordinated data transmission may be performed directly when the third backoff procedure is completed, that is, when the waiting time ends.

With the above method, the primary network device achieves "waiting" through the conventional CSMA/CA backoff procedure, so that the above method has good compatibility with the related technology.

It is also feasible to enable, by using a separate control process, the primary network device to perform data transmission after the waiting time ends. For example, in the waiting state, the backoff counter of the primary network device may be temporarily set to 0.

In some embodiments, an IFS before the third backoff procedure meets at least one of the following conditions: being equal to an Arbitration Inter-Frame Space (AIFS); being less than the AIFC; being equal to a DCF Inter-Frame Space (DCF IFS, or DIFS); or being less than the DIFS.

In one implementation of the embodiment of the present disclosure, referring to FIG. 13, an xIFS exists before each backoff procedure, and a specific length of the IFS before the third backoff procedure performed by the primary network device may be the AIFS or the DIFS. Since the AIFS and the DIFS are both optional modes of the xIFS specified in the 802.11 standards, good compatibility can be ensured by using the AIFS or the DIFS.

Alternatively, the xIFS before the third backoff procedure may be less than the AIFS and the DIFS, so as to shorten the overall waiting process.

It is feasible that the primary network device and the secondary network device actually implement the method provided in the embodiments of the present disclosure, and the specific operations performed by the primary network device and the secondary network device may be understood in different ways from different perspectives.

For example, since the primary network device and the secondary network device are necessarily synchronized, when the primary network device performs the third backoff procedure, it may be considered that the secondary network device starts a new backoff procedure after an xIFS passes.

Alternatively, if the waiting time is equal to the remaining backoff time of the secondary network device, it may be understood as that the secondary network device "continues" the original backoff procedure (i.e., the second backoff procedure) after an xIFS passes.

Alternatively, the third backoff procedure may be understood as that the primary network device "increases" the remaining backoff time which is 0 to the waiting time after an xIFS passes, and "continues" the original backoff procedure (i.e., the first backoff procedure).

In some embodiments, after determining the waiting time (S102), the data sending method further includes:
S102A, in response to a channel state of the primary network device and/or a channel state of the secondary network device changing to being busy before the waiting time ends, performing a fourth backoff procedure, with an upper limit time of a contention window in the fourth backoff procedure being equal to an upper limit time of a contention window in the first backoff procedure.

In one implementation of the embodiment of the present disclosure, the channel of the primary network device or the secondary network device may become busy again during the waiting time, in which case coordinated data transmission cannot be performed even if the waiting process is continued. Therefore, the primary network device may restart a backoff procedure (i.e., the fourth backoff procedure), but the upper limit time (CW) of the contention window in the fourth backoff procedure is not changed.

For example, referring to FIG. 14, if the channel (i.e., the target channel) of the primary network device becomes busy during the waiting time, the primary network device cannot use the target channel, so the primary network device performs the fourth backoff procedure, and an initial backoff time of the fourth backoff procedure is still selected within the range of (0, CW); accordingly, the secondary network device continues the backoff procedure (i.e., the second backoff procedure) thereof.

For example, referring to FIG. 15, if the channel of the secondary network device becomes busy during the waiting time, the primary network device loses an "object" of the coordinated data transmission, so the primary network device performs the fourth backoff procedure, and the initial backoff time of the fourth backoff procedure is still selected within the range of (0, CW); accordingly, the secondary network device may continue the second backoff procedure after the busy state of the channel ends.

The channel states of the primary network device and the secondary network device may be acquired by wired backhaul or may be indirectly acquired through local CCA/NAV, which is not described in detail here.

After the new backoff procedure (i.e., the fourth backoff procedure) of the primary network device and the backoff procedure (i.e., the second backoff procedure) of the secondary network device are completed, since no coordinated data transmission is performed, the primary network device and the secondary network device can independently transmit data in the same manner as after completion of the conventional backoff procedure; or, the original primary network device or the original secondary network device may become a "new" primary network device after the backoff procedures are completed; or, if there is another network device that completes the backoff procedure to become a "new" primary network device during the backoff procedures, the original primary network device and the original secondary network device may become "new" secondary network devices.

In a second aspect, an embodiment of the present disclosure provides a data sending method, which is performed by a secondary network device.

The data sending method provided in the embodiment of the present disclosure is used for a primary network device (such as a sharing AP) and a secondary network device (such as a shared AP) to transmit data together in a wireless network (such as a WLAN), and is specifically performed by the secondary network device.

Referring to FIG. 1, the wireless network to which the embodiment of the present disclosure is applicable may include a plurality of network devices (e.g., APs), the different network devices are connected to each other (e.g., via a DS), and each network device may be further connected to one or more terminal devices (e.g., STAs).

In one implementation of the embodiment of the present disclosure, roles of the primary network device and the secondary network device may be determined based on initialization negotiation of a coordinated transmission set or based on factors such as a network topology, processing capabilities of the network devices, locations of the network devices, and coverage of the network devices. In this implementation, the roles of the primary network device and the secondary network device are permanent or semi-permanent relative to a network lifecycle.

Alternatively, in another implementation of the embodiment of the present disclosure, the primary network device may be a network device which first completes a backoff procedure of CSMA/CA (that is, which first gains a channel usage right) each time, and accordingly, the other network devices in the coordinated transmission set serve as the secondary network devices. In this implementation, the roles of the primary network device and the secondary network device dynamically change. For example, a network device may serve as the primary network device in one data transmission process, and serve as the secondary network device in a next data transmission process.

Therefore, "the method provided in the embodiment of the present disclosure is performed by a secondary network device" merely means that the network device when performing the method provided in the embodiment of the present disclosure acts as the secondary network device, and does not indicate that the primary network device and the secondary network device are of two different types.

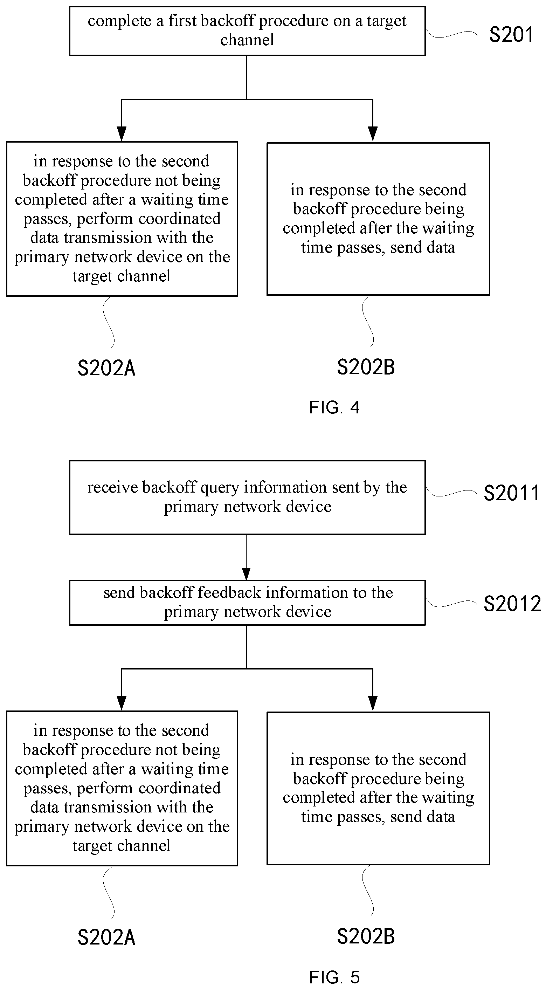

Referring to FIG. 4, the data sending method according to the embodiment of the present disclosure includes:
S201, receiving, during a second backoff procedure, synchronization information sent by the primary network device, with the synchronization information configured to indicate a coordinated data transmission process on a target channel;
S202A, in response to the second backoff procedure not being completed after a waiting time passes, performing coordinated data transmission with the primary network device on the target channel; and
S202B, in response to the second backoff procedure being completed after the waiting time passes, sending data.

When the primary network device sends data with the above method, the secondary network device which is performing the backoff procedure (i.e., the second backoff procedure) thereof may accordingly receive the synchronization information sent by the primary network device, for example, the synchronization information may be in the form of a TF, and the following situations occur.
(1) After the waiting time passes, if the backoff procedure of the secondary network device is not completed, the secondary network device does not continue the backoff procedure, but performs coordinated data transmission (channel sharing) with the primary network device on the target channel.
(2) If the backoff procedure of the secondary network device is completed before the waiting time ends, the secondary network device directly sends the data on a channel (not necessarily the target channel) through the backoff procedure of CSMA/CA, without performing coordinated data transmission.

In some embodiments, referring to FIG. 5, receiving the synchronization information sent by the primary network device (S201) includes:
S2011, receiving backoff query information sent by the primary network device; and
S2012, sending backoff feedback information to the primary network device, with the backoff feedback information including a remaining backoff time of the second backoff procedure.

In one implementation of the embodiment of the present disclosure, the secondary network device may further send the backoff feedback information (which, for example, may also serve as the above response information) based on the backoff query information (which, for example, may also serve as the synchronization information) sent by the primary network device, and add the remaining backoff time thereof to the backoff feedback information to inform the primary network device of the remaining backoff time.

In some embodiments, after receiving the synchronization information sent by the primary network device (S201), the data sending method further includes:
S201A1, acquiring the waiting time; and
S201A2, setting the remaining backoff time of the second backoff procedure to be equal to the waiting time.

In one implementation of the embodiment of the present disclosure, the secondary network device may further acquire the waiting time, set the remaining backoff time of the backoff procedure (i.e., the second backoff procedure) thereof to be equal to the waiting time, and then continue the second backoff procedure, thereby avoiding a situation where the second backoff procedure is completed before the waiting time ends due to the relatively short remaining backoff time of the second backoff procedure.

The secondary network device may receive an instruction from the primary network device via an air interface to acquire the waiting time or may acquire the waiting time by wired backhaul or by other means, which is not described in detail here.

In a third aspect, referring to FIG. 6, an embodiment of the present disclosure provides a primary network device, including a communication unit, a storage device, and a processor. The communication unit is configured to transmit data on a channel, the storage device stores a computer program executable by the processor, and when executed by the processor, the computer program implements the data sending method according to any of the embodiments of the present disclosure.

In some embodiments, the primary network device includes an AP; and the target channel includes a channel between the AP and an STA.

In one implementation of the embodiment of the present disclosure, the primary network device may be in the form of an AP (a sharing AP), such as a router or a mobile terminal with hotspot enabled, and the target channel for data transmission is a channel between the AP and an STA.

In a fourth aspect, referring to FIG. 7, an embodiment of the present disclosure provides a secondary network device, including a communication unit, a storage device, and a processor. The communication unit is configured to transmit data on a channel, the storage device stores a computer program executable by the processor, and when executed by the processor, the computer program implements the data sending method according to any of the embodiments of the present disclosure.

In some embodiments, the secondary network device includes an AP; and the target channel includes a channel between the AP and an STA.

In one implementation of the embodiment of the present disclosure, the secondary network device may be in the form of an AP (a shared AP), such as a router or a mobile terminal with hotspot enabled, and the target channel for data transmission is a channel between the AP and an STA.

It should be understood that the primary network device and the secondary network device provided in the embodiments of the present disclosure are not necessarily of two different types. For example, one network device may serve as the primary network device or the secondary network device in different cases.

In the primary network device or the secondary network device provided in the embodiment of the present disclosure, the communication unit, the storage device, and the processor are coupled and connected to each other through a structure such as a bus (Bus), so as to perform information interaction.

In the embodiments of the present disclosure, the communication unit may generally be a structure capable of performing wireless communication. For example, the communication unit may include one or more communication modules for transmitting and receiving wireless signals at different frequency bands (e.g., 2.4 GHz, 5 GHz, and 6 GHz), and a plurality of communication modules may be integrated into one device (e.g., a chip). In addition, the communication unit further includes a radio frequency module for processing radio frequency signals, and an ethernet interface of 802.3 standard.

In the embodiments of the present disclosure, the processor is a device with a data processing capability, and may include hardware such as a Central Processing Unit (CPU), an Application Specific Integrated Circuit (ASIC), and a Field Programmable Gate Array (FPGA), and may further include corresponding software.

In the embodiments of the present disclosure, the storage device is a device with a data storage capability, and may include hardware such as a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH), and may further include corresponding software.

In a fifth aspect, referring to FIG. 8, an embodiment of the present disclosure provides a computer readable medium having stored therein a computer program which, when executed by a processor, implements the data sending method according to any of the embodiments of the present disclosure.

It should be understood by those of ordinary skill in the art that the functional modules/units in all or some of the operations, the systems, and the devices disclosed above may be implemented as software, firmware, hardware, or suitable combinations thereof.

If implemented as hardware, the division between the functional modules/units stated above does not necessarily correspond to the division of physical components; for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/non-volatile and removable/non-removable media used in any method or technology for storing information (such as computer-readable instructions, data structures, program modules or other data). The computer storage medium includes, but is not limited to, an RAM (more specifically, an SDRAM, a DDR SDRAM, etc.), an ROM, an EEPROM, a FLASH or other magnetic disk storage, a Compact Disc Read Only Memory (CD-ROM), a Digital Versatile Disc (DVD) or other optical disk storage, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A data sending method performed by a primary network device, comprising:
completing a first backoff procedure on a target channel;
determining a waiting time; and
performing coordinated data transmission with a secondary network device on the target channel after the waiting time passes.

2. The method of claim 1, wherein determining the waiting time comprises:
acquiring a secondary-device remaining backoff time of the secondary network device, the secondary-device remaining backoff time being a remaining backoff time of a second backoff procedure which is being performed by the secondary network device; and
determining the waiting time based on the secondary-device remaining backoff time.

3. The method of claim 2, wherein acquiring the secondary-device remaining backoff time of the secondary network device comprises:
acquiring the secondary-device remaining backoff time of the secondary network device having a channel state of being idle.

4. The method of claim 2, wherein acquiring the secondary-device remaining backoff time of the secondary network device comprises at least one of:
acquiring the secondary-device remaining backoff time of the secondary network device by wired backhaul;
acquiring the secondary-device remaining backoff time of the secondary network device by clear channel assessment; or
sending backoff query information to the secondary network device, and determining the secondary-device remaining backoff time of the secondary network device based on backoff feedback information sent by the secondary network device.

5. The method of claim 2, wherein the secondary network device comprises a plurality of ports, and each of the ports has a port remaining backoff time; and acquiring the secondary-device remaining backoff time of the secondary network device comprises:
acquiring a minimum port remaining backoff time of the secondary network device as the secondary-device remaining backoff time of the secondary network device.

6. The method of claim 2, wherein determining the waiting time based on the secondary-device remaining backoff time comprises:
determining a maximum secondary-device remaining backoff time as the waiting time.

7. The method of claim 2, wherein
acquiring the secondary-device remaining backoff time of the secondary network device comprises: acquiring secondary-device remaining backoff times of a plurality of secondary network devices;
determining the waiting time based on the secondary-device remaining backoff time comprises: based on the secondary-device remaining backoff times, determining at least part of the secondary network devices as target secondary network devices, and determining the waiting time based on the secondary-device remaining backoff times of the target secondary network devices; and
performing coordinated data transmission with the secondary network device on the target channel comprises: performing coordinated data transmission with the target secondary network devices on the target channel.

8. The method of claim 7, wherein based on the secondary-device remaining backoff times, determining at least part of the secondary network devices as the target secondary network devices, and determining the waiting time based on the secondary-device remaining backoff times of the target secondary network devices comprises:
determining a secondary network device having a minimum secondary-device remaining backoff time as a target secondary network device, and determining the secondary-device remaining backoff time of the target secondary network device as the waiting time.

9. The method of claim 2, wherein after the waiting time passes, performing coordinated data transmission with the secondary network device on the target channel comprises:
performing a third backoff procedure; an initial backoff time of the third backoff procedure being equal to the waiting time; and
performing coordinated data transmission with the secondary network device on the target channel after the third backoff procedure is completed.

10. The method of claim 9, wherein an inter frame space before the third backoff procedure meets at least one of:
being equal to an arbitration inter-frame space;
being less than the arbitration inter-frame space;
being equal to a distributed coordination function inter-frame space; or
being less than the distributed coordination function inter-frame space.

11. The method of claim 1, wherein after the waiting time passes, performing coordinated data transmission with the secondary network device on the target channel comprises:
sending backoff adjustment information to the secondary network device, the backoff adjustment information being configured to instruct the secondary network device to set a secondary-device remaining backoff time of the secondary network device to be equal to the waiting time.

12. The method of claim 1, wherein between completing the first backoff procedure on the target channel and determining the waiting time, the method further comprises:
sending synchronization information to preset candidate network devices, the synchronization information being configured to indicate a coordinated data transmission process on the target channel;
receiving response information sent by at least part of the candidate network devices; and
determining at least part of the candidate network devices as secondary network devices based on the response information.

13. The method of claim 1, wherein after determining the waiting time, the method further comprises:
in response to a channel state of the primary network device and/or a channel state of the secondary network device changing to being busy before the waiting time ends, performing a fourth backoff procedure, an upper limit time of a contention window in the fourth backoff procedure being equal to an upper limit time of a contention window in the first backoff procedure.

14. A data sending method performed by a secondary network device, comprising:
receiving, during a second backoff procedure, synchronization information sent by a primary network device, the synchronization information being configured to indicate a coordinated data transmission process on a target channel;
in response to the second backoff procedure not being completed after a waiting time passes, performing coordinated data transmission with the primary network device on the target channel; and
in response to the second backoff procedure being completed after the waiting time passes, sending data.

15. The method of claim 14, wherein receiving the synchronization information sent by the primary network device comprises:
receiving backoff query information sent by the primary network device; and
sending backoff feedback information to the primary network device, the backoff feedback information comprising a remaining backoff time of the second backoff procedure.

16. The method of claim 14, wherein after receiving the synchronization information sent by the primary network device, the method further comprises:
acquiring the waiting time; and
setting a remaining backoff time of the second backoff procedure to be equal to the waiting time.

17. A primary network device, comprising a communication unit, a storage device, and a processor; wherein the communication unit is configured to transmit data on a channel, the storage device stores a computer program executable by the processor, and when executed by the processor, the computer program implements the data sending method of any one of claims 1 to 13.

18. The primary network device of claim 17, wherein
the primary network device comprises an access point; and
the target channel comprises a channel between the access point and a station.

19. A secondary network device, comprising a communication unit, a storage device, and a processor; and the communication unit is configured to transmit data on a channel, the storage device stores a computer program executable by the processor, and when executed by the processor, the computer program implements the data sending method of any one of claims 14 to 16.

20. The secondary network device of claim 19, wherein
the secondary network device comprises an access point; and
the target channel comprises a channel between the access point and a station.

21. A computer readable medium having stored therein a computer program which, when executed by a processor, implements the data sending method of any one of claims 1 to 16.
